# EUROPÄISCHE PATENTSCHRIFT

(11) **EP 1 796 520 B1**
(45) Veröffentlichungstag und Bekanntmachung des Hinweises auf die Patenterteilung: **30.01.2008**
(21) Anmeldenummer: 05780320.7
(22) Anmeldetag: 09.08.2005
(51) Int. Cl.: A47J 43/07, A47J 43/044

(54) **STABMIXER MIT EINEM PLATINENTRÄGER**
ROD MIXER COMPRISING A PLATE SUPPORT
MIXEUR MANUEL COMPORTANT UN SUPPORT DE PLATINE

(30) Priorität: 31.08.2004 DE 102004042087
(43) Veröffentlichungstag der Anmeldung: 20.06.2007
(73) Patentinhaber: BSH Bosch und Siemens Hausgeräte GmbH, 81739 München (DE)
(72) Erfinder: OGRIZEK, Darko, 3320 Velenje (SI); POGACAR, Toni, 3311 Sempeter (SI); SEDOVSEK, Aleksander, 3330 Mozirje (SI)
(86) Internationale Anmeldenummer: PCT/EP2005/053916
(87) Internationale Veröffentlichungsnummer: WO 2006/024593

(56) Entgegenhaltungen:
- WO-A-02/03842
- DE-A1- 3 709 573
- DE-A1- 19 635 223
- FR-A- 2 758 073
- FR-E- 76 618
- US-B1- 6 234 663

## Beschreibung

Die Erfindung betrifft einen Stabmixer gemäß dem Oberbegriff des Anspruchs 1.

Aus DE 37 09 573 A1 ist ein Stabmixer bekannt, der mit einem in einem Gerätegehäuseteil angeordneten Motor zum Antrieb eines Mixstabes versehen ist und sich ohne Schraub- und Klebeverbindungen zusammensetzen lässt. Hierzu sind die einzelnen Bauteile so untereinander angeordnet und mit Nasen und Vorsprüngen zum gegenseitigen Einhaken bzw. zum Verklipsen ausgestattet, dass nach dem Zusammenbau aller Teile ein fertig montierter Stabmixer entsteht, der in seiner Außenkontur rundum völlig geschlossen ist. Der Motor ist dabei am abtriebsseitigen Ende über ein elastisch federnd ausgebildetes Lager axial verschiebbar im Gerätegehäuse aufgenommen. Eine Leiterplatte weist zwei Kontaktfahnen auf, die zusammen mit der Leiterplatte in am Motor vorgesehene Schlitzöffnungen zur Stromversorgung von oben einschiebbar sind. Die Leiterplatte ist in eine Schlitzöffnung eines Lagerteils einschiebbar, das Wandteile aufweist, an denen Zapfen angeformt sind, die in Bohrungen einer Schaltwippe einrasten. Nachteilig an diesem Stand der Technik ist es, dass die Schaltwippe erst an die Zapfen angesetzt wird, wenn das Lagerteil bereits in das Gerätegehäuse eingebaut ist. Dies führt zu einer erschwerten Montage des Stabmixers, da die Schaltwippe nachträglich, also nach erfolgter Montage des Lagerteils bzw. der Leiterplatte über eine Öffnung im Gerätegehäuse eingeführt und mittels einer Nase an einer Rückwand eines Gehäuseteils hinterrastet werden muss. Danach stützt sich die Schaltwippe in einer betriebsgemäßen Endposition an dem Gehäuseteil ab.

Aufgabe der Erfindung ist es, die Montage des Stabmixers zu vereinfachen.

Diese Aufgabe wird erfindungsgemäß dadurch gelöst, dass das mindestens eine Stellglied am Halter vormontiert gelagert ist. Durch die vormontierte Lagerung des mindestens einen Stellgliedes am Halter kann das Stellglied oder können die Stellglieder am Halter betriebsgemäß befestigt werden, bevor der Halter in das Gehäuse des Stabmixers eingesetzt wird. Dabei ist die Funktionseinheit von Leiterplatte, elektrische Bauteile und Stellglieder noch vor der entgültigen Fertigmontage soweit zusammengestellt, dass diese Funktionseinheit beispielsweise auf ihre mechanische und/oder elektrische Funktionstüchtigkeit getestet werden kann. Das Einfügen der Stellglieder in die Lagerstellen ist auch außerhalb des Gerätegehäuses einfacher durchzuführen, da alle Einzelteile ohne Gerätegehäuse leichter zugänglich sind, als dies der Fall wäre, wenn der Halter und die Leiterplatte bereit in das Gerätegehäuse eingebaut wären. Dies ist insbesondere bei Gehäusen von Stabmixer von Bedeutung, die üblicherweise relativ klein ausgebildet sind.

Vorzugsweise ist das mindestens eine Stellglied zwischen zwei durch den Halter bestimmten betriebsgemäßen Endstellungen verstellbar am Halter gelagert. Im Falle eines Druckschalters sind die Endstellungen eine Ruhestellung, in der der Schalter durch das Stellglied nicht betätigt ist und eine Schaltstellung, in der der Schalter betätigt ist, dessen Kontakte also geschlossen sind. Im Falle eines Drehpotentiometers sind die Endstellungen eine erste Winkelstellung eines Stellrades, in der beispielsweise die Drehzahl des Motors am geringsten oder Null ist und eine zweite Winkelstellung des Stellrades, in der beispielsweise die Drehzahl des Motors maximal ist. Jede der Endstellungen kann durch einen am Stellglied vorgesehenen Anschlag vorgegeben sein, der an einem Gegenanschlag des Halters oder der Platine in der Endstellung anschlägt. Im Falle des Druckschalters kann die gedrückte Endstellung, also die Schaltstellung dadurch einen Anschlag bilden, dass das Stellglied auf die elektrischen Kontakte des Schalters drückt, die ihrerseits auf die Oberseite der Leiterplatte drücken und auf dessen Oberseite aufliegen. Der Anschlag für die gedrückte Endstellung kann alternativ auch beispielsweise durch einen vorspringenden Ansatz am Stellglied gebildet werden, der in der gedrückten Endstellung an der Lagerstelle ansteht.

Der Halter kann ein an der leiterbahnseitigen Unterseite der Leiterplatte vorgesehenes Rahmenteil aufweisen, das ein Rastmittel trägt, an dem die Leiterplatte formschlüssig befestigt ist. Das Rahmenteil ist vorzugsweise an die Außenkontur der Leiterplatte zumindest weitgehend angepasst. D.h. mit Ausnahme allenfalls der elektrischen Kontakte zum Anschließen des Motors ragen keine vorspringenden Teile der Leiterplatte über die Kontur des Rahmenteils hinaus. Dadurch wird eine Beschädigung der Leiterplatte weitgehend vermieden. Möglicherweise zu Beschädigungen führende Kräfte werden von dem Rahmenteil aufgenommen. Als Rastmittel kann ein oder können mehrere Rasthaken vorgesehen sein, die sich aus der Ebene der Leiterplatte beispielsweise senkrecht erstrecken und Bohrungen in der Leiterplatte durchgreifen. Die Rasthaken können alternativ die Leiterplatte auch seitlich umgreifen.

Die mindestens eine Lagerstelle ist vorzugsweise an einem aus der Ebene der Leiterplatte vorstehenden Arm des Halters ausgebildet. Der vorstehende Arm kann ausgehend von dem an der leiterbahnseitigen Unterseite der Leiterplatte vorgesehenen Rahmenteil sich zur Oberseite der Leiterplatte bis über das zugeordnete elektrische Bauteil erstrecken. Dadurch wird eine sehr kompakte Bauweise für das Rahmenteil erzielt. Jede der Lagerstellen kann möglichst nahe an das elektrische Bauteil herangeführt sein, so dass das jeweils zugeordnete Stellglied möglichst klein, also kompakt ausgebildet sein kann. Durch die kompakte Ausbildung der Funktionseinheit ist ein Einbau der Funktionseinheit von Leiterplatte, elektrischer Bauteile und Stellglieder in das Gerätegehäuse des Stabmixers einfacher möglich.

Das elektrische Bauteil kann ein Schalter sein, der durch Drücken eines vorzugsweise stiftartigen Stellgliedes, das in einer ersten Lagerstelle des Halters axial verschiebbar geführt ist, zu schalten ist. Die erste Lagerstelle bildet dabei einen Lagerbock, der eine nabenartige Durchführung aufweist, in der das eingeführte Stellglied hin und her geschoben werden kann. Da die Leiterplatte mit dem Halter fest verbunden ist und die Lagerstellen fest mit dem Halter verbunden sind, ist eine eindeutige, nichtverstellbare Positionierung zwischen Lagerstellen und den zugeordneten elektrischen Bauteilen sichergestellt. So wird ein Ende des axial verschiebbaren stiftartigen Stellgliedes stets genau auf die elektrischen Kontakte des zugeordneten Schalters treffen. Diese Lagezuordnung ist bereits nach der Vormontage der Funktionseinheit von Leiterplatte, Halter, elektrischer Kontakte und Stellglieder festgelegt und kann sich nicht durch eine Endmontage in das Gerätegehäuse des Stabmixers verändern. Evtl. Fehlstellungen können in einfacher Weise außerhalb des Gerätegehäuses erkannt und korrigiert werden, ehe die Funktionseinheit in das Gerätegehäuse eingebaut wird. Dieser Umstand reduziert die Fehlerwahrscheinlichkeit bei fertigt montierten und evtl. bereits ausgelieferten Stabmixern. Dadurch ist die Fertigungsqualität erhöht.

Um ein unerwünschtes und /oder unbestimmtes Drehen des stiftartigen Stellgliedes um seine axiale Erstreckung zu verhindern, kann das stiftartige Stellglied beispielsweise einen T-förmigen Querschnitt aufweisen. Die Lagerstelle weist dabei eine nabenartige Durchführung auf, die dem T-förmigen Querschnitt des Stellgliedes angepasst ist. Der T-förmige Querschnitt ermöglicht bei minimalem Materialeinsatz eine maximal Steifigkeit für das Stellglied. Statt eines T-förmigen Querschnitts kann das Stellglied auch jede andere geeignete Querschnittsform aufweisen, die ein Drehen des Stellgliedes um seine axiale Erstreckung verhindert, eine axiale Bewegung aber zulässt. Der Querschnitt kann dazu beispielsweise quadratisch, rechteckig, dreieckig oder sternförmig sein. Ein Verdrehen des Stellgliedes zu verhindern ist insbesondere dann von Vorteil, wenn an dem Stellglied eine Betätigungsfläche vorgesehen bzw. mit diem verbunden oder angeformt ist, die eine von der Kreisform abweichende Form aufweist, die im Gerätegehäuse winkellagerichtig einzubauen ist.

Zur selbsttätigen Rückstellung des Stellgliedes in seine Ruheposition, kann zwischen erster Lagerstelle und der Betätigungsfläche des Stellgliedes ein Federelement vorgesehen ist. Das Federelement kann beispielsweise im Kunststoffspritzgussverfahren an das Stellglied mit angeformt sein. Vorzugsweise ist jedoch ein gesondertes Federelement vorgesehen, das zwischen Stellglied und Lagerstelle eingesetzt gehalten ist. Im Falle eines stiftartigen Stellgliedes kann das gesonderte Federelement eine Federwendel sein, die axial auf einen Schaftabschnitt des stiftartigen Stellgliedes aufgeschoben wird. Das eine Ende des Federelements kann sich an einem Halteabschnitt am Stellglied abstützen. Dieser Halteabschnitt kann bevorzugt an die Betätigungsfläche sich anschließend positioniert sein. Das zweite Ende des Federelements kann sich alternativ direkt am Halter oder an der Lagerstelle abstützen.

Zur Vermeidung einer Bewegung des stiftartigen Stellgliedes über seine Ruheposition hinaus, kann am stiftartigen Stellglied ein an der ersten Lagerstelle angreifendes Rastmittel vorgesehen sein. Vorzugsweise ist das Rastmittel an einem der Betätigungsfläche gegenüberliegendem Ende des Stellgliedes vorgesehen. Das Rastmittel ist vorzugsweise an der Stirnseite des Stellgliedes vorgesehen. Es kann beispielsweise zwei gegenüberliegende Rastnasen aufweisen, deren freie Enden in randoffene Aussparungen am Schaftabschnitt des stiftartigen Stellgliedes unter Federvorspannung einschwenken können. Im federentlasteten Zustand ragen die Rastnasen über die Kontur des Schaftabschnitts bzw. des Stellgliedes hinaus. Ein mit solchen Rastnasen ausgestattetes Stellglied kann in einfacher Weise montiert werden. Zuerst wird die Federwendel auf den Schaftabschnitt des Stellgliedes aufgeschoben und anschließend das Stellglied in seiner Betätigungsrichtung in die Lagerstelle eingesteckt. Während des Einsteckens des Schaftabschnitts des Stellgliedes werden die Rastnasen beim Einstecken in die Lagerstelle nach innen in die randoffenen Aussparungen des stiftartigen Stellgliedes verschwenkt, so dass der Schaftabschnitt in die Lagerstelle vollständig eingesteckt werden kann, bis die Rastnasen nach passieren der Lagerstelle sich wieder aufspreizen können. Das Federelement spannt nun das Stellglied in seine Ruheposition vor. Dabei liegen die Rastnasen an einer Unterseite der Lagerstelle an, so dass das Stellglied nicht aus der Lagerstelle herausbewegt werden kann.

Wenn das elektrische Bauteil ein Drehpotentiometer ist, kann das Stellglied ein Stellrad sein, das durch Drehen das Drehpotentiometer verstellt. Dazu ist das Stellrades in einer zweiter Lagerstelle des Halters drehbar gelagert ist. Das Stellrad kann vorzugsweise einen Lagerzapfen aufweisen, der in einer halbschalenförmigen zweiten Lagerstelle aufliegt. In Verlängerung des Lagerzapfens kann eine das Drehpotentiometer verändernde Verstellwelle mit dem Stellrad verbunden sein. Das Stellrad kann kreisscheibenförmig ausgebildet sein. Alternativ ist es ausreichend, wenn das Stellrad nur als Kreissegment ausgebildet ist. Das Kreissegment ist dann mindestens so groß ausgebildet, wie es dem gewünschten Verstellwinkel entspricht, über den das Drehpotentiometer verstellbar sein soll. D.h. wenn der Verstellwinkel beispielsweise 180° betragen soll, so sollte das Stellrad mindestens halbkreisscheibenförmig ausgebildet sein. Im Zentrum des Stellrades ist senkrecht zur Ebene des Stellrades, also stirnseitig ein Lagerzapfen vorgesehen. Der Lagerzapfen ist in eine schalenförmige zweite Lagerstelle einsetzbar. Wenn die zweite Lagerstelle radial offen ausgebildet ist und beispielsweise die Lagerstelle um einen etwas größeren Winkel als 180° den Lagerzapfen umgreifend ausgebildet ist, so kann der Lagerzapfen und damit das Stellrad durch radiales Eindrücken des Lagerzapfens in die zweite Lagerstelle eingeklipst werden. An einem dem Stellrad gegenüberliegenden Ende des Lagerzapfens kann eine Verstellwelle vorgesehen sein, die das Drehpotentiometer verstellt. Dazu ist an einem dem Lagerzapfen gegenüberliegenden Ende der Verstellwelle ein Kupplungszapfen angeformt, der in die ein drehbares Nabenteil des Drehpotentiometers einsteckbar ist.

Die erfindungsgemäße Funktionseinheit von Leiterplatte, Halter, Lagerstellen und Stellglieder wird vorzugsweise bei Stabmixern eingesetzt, kann jedoch auch bei anderen Haushaltsgeräten, wie beispielsweise Küchengeräten in gleicher oder analoger Weise verwendet werden. Die erfindungsgemäße Funktionseinheit ist insbesondere dann von Vorteil, wenn nur ein sehr geringer Bauraum im Gerätegehäuse zur Verfügung steht.

Ein bevorzugtes Ausführungsbeispiel der Erfindung ist im Folgenden anhand der Figuren 1 bis 3 näher erläutert.

Es zeigen:
- Figur 1: eine perspektivische Ansicht einer erfindungsgemäßen Funktionseinheit von Leiterplatte, Halter, Lagerstellen und Stellglieder;
- Figur 2: die erfindungsgemäße Funktionseinheit aus Figur 1 in einer zweiten perspektivischen Ansicht;
- Figur 3: die erfindungsgemäße Funktionseinheit aus Figur 1 und 2 in einer Ansicht von unten.

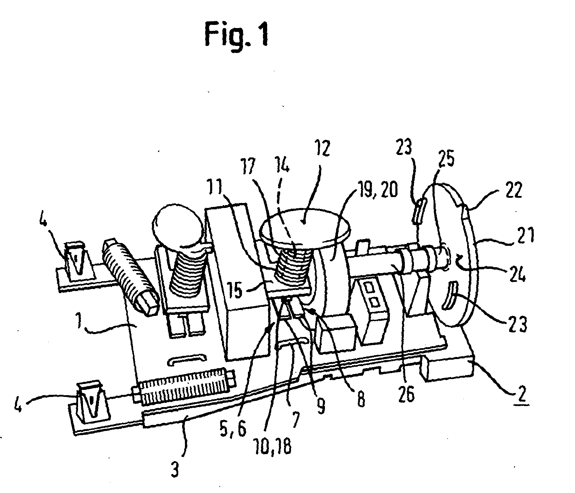

Eine erfindungsgemäße Funktionseinheit ist in Figur 1 gezeigt. Eine Leiterplatte 1 ist auf einen Halter 2 durch ein an einem Rahmenteil 3 angeformtes Rastmittel 13 aufgeklipst. Der Halter 2 ist mit dem Rahmenteil 3 verbunden, das im wesentlichen rechteckige Form aufweist und der Kontur der Leiterplatte 1 angepasst ist. An einem unteren Ende der Leiterplatte 1 sind zwei Kontaktschuhe 4 zum Anschluß eines Motors vorgesehen. Die Leiterplatte weist ein erstes elektrisches Bauteil 5 auf. Das elektrische Bauteil 5 ist als Schalter 6 ausgebildet. Zur Bildung des Schalters 6 ist ein blankes Drahtstück 7 mit einem elektrischen Anschluss einer Leiterbahn an der Unterseite der Leiterplatte 1 elektrisch kontaktiert. Eine dem Drahtstück 7 zugeordnete Kontaktfeder 8 bildet den zweiten Kontakt des Schalters 6. Die Kontaktfeder 8 trägt zwei durch einen Schlitz getrennte Federzungen 9, die jedoch elektrisch miteinander verbunden sind. Die Federzungen 9 werden von einem freien stirnseitigen Ende 10 eines stiftartigen Stellgliedes 11 betätigt. An einem dem freien Ende des stiftartigen Stellgliedes 11 gegenüberliegenden Ende ist eine Betätigungsfläche 12 angebracht. Das stiftartige Stellglied 11 weist einen Schaftabschnitt 14 auf, der in eine erste Lagerstelle 15 eingesteckt ist.

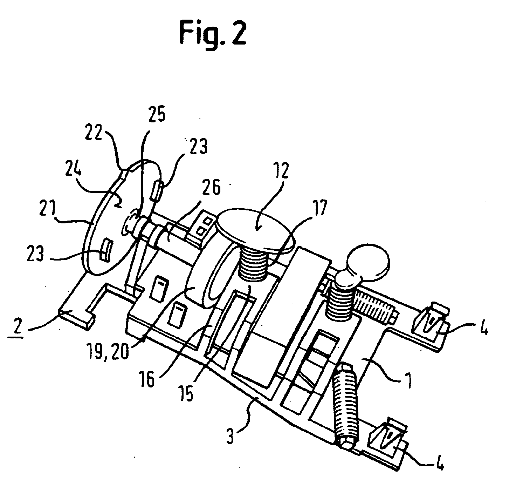

Die Lagerstelle 15 ist, wie in Figur 2 dargestellt, an einem aus der Ebene des Halters 2 vorstehenden Arm 16 des Halters 2 ausgebildet. Der Arm 16 umfasst zwei parallel zueinander in einem Abstand voneinander verlaufende Stegabschnitte. Zwischen der Lagerstelle 15 und dem Betätigungsfläche 12 ist ein als Federwendel ausgebildetes Federelement 17 eingefügt. Um zu Verhindern, dass das stiftartige Stellglied 11 durch die Federwendel nach oben aus der ersten Lagerstelle 15 herausgeworfen wird, ist am freien Ende 10 des Schaftabschnittes 14 ein Rastmittel 18 angeformt.

Ein zweites elektrisches Bauteil 19 wird von einem Drehpotentiometer 20 gebildet. Zur Verstellung des Drehpotentiometer 20 ist ein Stellrad 21 vorgesehen. Das Stellrad 21 trägt einen Zeiger 22, um die aktuelle Winkelstellung des Stellrades 21 anzuzeigen. An einer Unterseite des Stellrades 21 sind zwei Anschlagsnasen 23 vorgesehen, die den Schwenkwinkel des Stellrades 21 begrenzen, also die Endstellungen zwischen denen das Stellglied verstellbar ist bestimmen. An einer Stirnseite 24 des Stellrades 21 ist ein Lagerzapfen 25 angeformt. Der Lagerzapfen 25 ruht in einer zweiten Lagerstelle 26 des Halters 2. In Verlängerung des Lagerzapfens 25 ist eine Verstellwelle 26 mit dem Stellrad 21 verbunden.

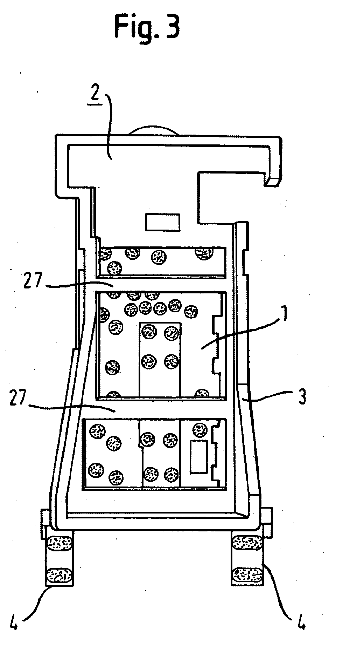

Figur 3 zeigt die Funktionseinheit von der Unterseite der Leiterplatte 1 aus. Der Halter 2 umfasst das Rahmenteil 3, an dem die Leiterplatte 1 befestigt ist. Das Rahmenteil 3 ist annähernd rechteckig ausgebildet und durch zwei Querstreben 27 versteift.

## Patentansprüche

1. Stabmixer mit einem Motor zum Antrieb eines Bearbeitungswerkzeuges, der an eine elektrische Leiterplatte (1) kontaktiert ist, die zur Steuerung des Motors mindestens ein elektrisches Bauteil (5, 19) aufweist, das durch ein zugeordnetes, von Hand zu betätigendes Stellglied (11, 21) veränderbar ist, und welche Leiterplatte (1) in einen Halter (2) eingesetzt ist, der mindestens eine Lagerstelle (15, 26) aufweist, in der das Stellglied (11, 21) geführt ist, **dadurch gekennzeichnet, dass** das mindestens eine Stellglied (11, 21) am Halter (2) vormontiert gelagert ist.

2. Stabmixer nach Anspruch 1, **dadurch gekennzeichnet, dass** das mindestens eine Stellglied (11, 21) zwischen zwei durch den Halter (2) bestimmten betriebsgemäßen Endstellungen verstellbar am Halter (2) gelagert ist.

3. Stabmixer nach Anspruch 1 oder 2, **dadurch gekennzeichnet, dass** der Halter (2) ein an der leiterbahnseitigen Unterseite der Leiterplatte (1) vorgesehenes Rahmenteil (3) aufweist, das ein Rastmittel (13) trägt, an dem die Leiterplatte (1) formschlüssig befestigt ist.

4. Stabmixer nach einem der Ansprüche 1 bis 3, **dadurch gekennzeichnet, dass** die mindestens eine Lagerstelle (15, 26) an einem aus der Ebene der Leiterplatte (1) vorstehenden Arm (16) des Halters (2) ausgebildet ist.

5. Stabmixer nach Anspruch 4, **dadurch gekennzeichnet, dass** der vorstehende Arm (16) ausgehend von dem an der leiterbahnseitigen Unterseite der Leiterplatte (1) vorgesehenen Rahmenteil (3) sich zur Oberseite der Leiterplatte (1) bis über das zugeordnete elektrische Bauteil (5, 19) erstreckt.

6. Stabmixer nach Anspruch 4 oder 5, **dadurch gekennzeichnet, dass** das elektrische Bauteil (5) ein Schalter (6) ist, der durch Drücken eines stiftartigen Stellgliedes (11), das in einer ersten Lagerstelle (15) des Halters (2) axial verschiebbar geführt ist, zu schalten ist.

7. Stabmixer nach Anspruch 6, **dadurch gekennzeichnet, dass** das stiftartige Stellglied (11) einen T-förmigen Querschnitt aufweist.

8. Stabmixer nach Anspruch 6 oder 7, **dadurch gekennzeichnet, dass** zur selbsttätigen Rückstellung des Stellgliedes (11) in seine Ruheposition, zwischen erster Lagerstelle (15) und einer Betätigungsfläche (12) des Stellgliedes (11) ein Federelement (17) vorgesehen ist.

9. Stabmixer nach Anspruch 8, **dadurch gekennzeichnet, dass** zur Vermeidung einer Bewegung des stiftartigen Stellgliedes (11) über seine Ruheposition hinaus, am stiftartigen Stellglied (11) ein an der ersten Lagerstelle (15) angreifendes Rastmittel (18) vorgesehen ist.

10. Stabmixer nach Anspruch 4, **dadurch gekennzeichnet, dass** das elektrische Bauteil (19) ein Drehpotentiometer (20) ist, das durch Drehen eines Stellrades (21), das in einer zweiter Lagerstelle (26) des Halters (2) drehbar gelagert ist, zu verstellen ist.

11. Stabmixer nach Anspruch 10, **dadurch gekennzeichnet, dass** das Stellrad (21) einen Lagerzapfen (25) aufweist, der in einer halbschalenförmigen zweiten Lagerstelle (26) aufliegt.

12. Stabmixer nach Anspruch 10 oder 11, **dadurch gekennzeichnet, dass** in Verlängerung des Lagerzapfens (25) eine das Drehpotentiometer (20) verändernde Verstellwelle (26) mit dem Stellrad (21) verbunden ist.

## Claims

1. Rod mixer with a motor for drive of a processing tool, which is contacted with an electrical circuitboard (1) having for control of the motor at least one electrical component (5, 19), which can be changed by an associated, manually actuable setting element (11, 21), which circuitboard (1) is inserted into a mount (2) having at least one mounting point (15, 26) in which the setting element (11, 21) is guided, **characterised in that** the at least one setting element (11, 21) is mounted at the mount (2) by preassembly.

2. Rod mixer according to claim 1, **characterised in that** the at least one setting element (11, 21) is adjustably mounted at the mount (2) between two operational end settings determined by the mount (2).

3. Rod mixer according to claim 1 or 2, **characterised in that** the mount (2) comprises a frame part which is provided at the underside, which is at the conductor track side, of the circuitboard (1) and which carries detent means (13) at which the circuitboard (1) is mechanically positively fastened.

4. Rod mixer according to one of claims 1 to 3, **characterised in that** the at least one mounting point (15, 26) is formed at an arm (16), which protrudes from the plane of the circuitboard (1), of the mount (2).

5. Rod mixer according to claim 4, **characterised in that** the protruding arm (16) extends from the frame part (3), which is provided at the underside - which is at the conductor track side - of the circuitboard (1), to the upper side of the circuitboard (1) until beyond the associated electrical component (5, 19).

6. Rod mixer according to claim 4 or 5, **characterised in that** the electrical component (5) is a switch (6) which is to be switched by pressing a pin-like setting element (11) guided in a first mounting point (15) of the mount (2) to be axially displaceable.

7. Rod mixer according to claim 6, **characterised in that** the pin-like setting element (11) has a T-shaped cross-section.

8. Rod mixer according to claim 6 or 7, **characterised in that** a spring element (17) is provided between a first mounting point (15) and an actuating surface (12) of the setting element (11) for automatic resetting of the setting element (11) into its rest position.

9. Rod mixer according to claim 8, **characterised in that** a detent means (18) engaging at the first mounting point (15) is provided at the pin-like setting element (11) for avoidance of movement of the pin-like setting element (11) beyond its rest position.

10. Rod mixer according to claim 4, **characterised in that** the electrical component (19) is a rotary potentiometer (20) adjustable by rotation of a setting wheel (21) rotatably mounted in a second mounting point (26) of the mount (2).

11. Rod mixer according to claim 10, **characterised in that** the setting wheel (21) has a bearing pin (25) which rests in a shell-shaped second mounting point (26).

12. Rod mixer according to claim 10 or 11, **characterised in that** in prolongation of the bearing pin (25) an adjusting shaft (26) changing the rotary potentiometer (20) is connected with the setting wheel.

## Revendications

1. Mixeur manuel comprenant un moteur pour l'entraînement d'un outil de traitement, qui est mis en contact avec une plaque imprimée (1) électrique, laquelle présente au moins un composant (5, 19) électrique pour la commande du moteur qui peut être modifié par un actionneur (11, 21) attribué et à actionner manuellement, et laquelle plaque imprimée (1) est insérée dans un support (2) qui présente au moins un point de palier (15, 26), dans lequel l'actionneur (11, 21) est guidé, **caractérisé en ce que** le au moins un actionneur (11, 21) est logé pré-monté sur le support (2).

2. Mixeur manuel selon la revendication 1, **caractérisé en ce que** le au moins un actionneur (11, 21) est logé sur le support (2) de façon à pouvoir être déplacé entre deux positions extrêmes conformes au service et déterminées par le support (2).

3. Mixeur manuel selon la revendication 1 ou 2, **caractérisé en ce que** le support (2) présente une partie de cadre (3) prévue sur le côté inférieur côté piste conductrice de la plaque imprimée (1) qui porte un moyen d'encliquetage (13) sur lequel la plaque imprimée (1) est fixée par complémentarité de formes.

4. Mixeur manuel selon l'une quelconque des revendications 1 à 3, **caractérisé en ce que** le au moins un point de palier (15, 26) est conçu sur un bras (16), dépassant du plan de la plaque imprimée (1), du support (2).

5. Mixeur manuel selon la revendication 4, **caractérisé en ce que** le bras (16) saillant s'étend à partir de la partie de cadre (3) prévue sur le côté inférieur côté piste conductrice de la plaque imprimée (1) vers le côté supérieur de la plaque imprimée (1) jusqu'au composant (5, 19) électrique attribué.

6. Mixeur manuel selon la revendication 4 ou 5, **caractérisé en ce que** le composant (5) électrique est un interrupteur (6) qui doit être commuté en enfonçant un actionneur (11) du type broche guidé de façon coulissante axialement dans un premier point de palier (15) du support (2).

7. Mixeur manuel selon la revendication 6, **caractérisé en ce que** l'actionneur (11) de type broche présente une section en T.

8. Mixeur manuel selon la revendication 6 ou 7, **caractérisé en ce qu'**un élément de ressort (17) est prévu pour le retour automatique de l'actionneur (11) dans sa position de repos, entre le premier point de palier (15) et une surface d'actionnement (12) de l'actionneur (11).

9. Mixeur manuel selon la revendication 8, **caractérisé en ce qu'**un moyen d'encliquetage (18) s'appliquant sur le premier point de palier (15) est prévu sur l'actionneur (11) de type broche afin d'éviter un déplacement de l'actionneur (11) du type broche au-delà de sa position de repos.

10. Mixeur manuel selon la revendication 4, **caractérisé en ce que** le composant (19) électrique est un potentiomètre rotatif (20) qui peut être réglé en tournant une roue de réglage (21) qui est montée rotative dans un second point de palier (26) du support (2).

11. Mixeur manuel selon la revendication 10, **caractérisé en ce que** la roue de réglage (21) présente un tourillon (25), qui repose dans un second point de palier (26) en forme de demi-coque.

12. Mixeur selon la revendication 10 ou 11, **caractérisé en ce qu'**un arbre de réglage (26) faisant varier le potentiomètre rotatif (20) est relié à la roue de réglage (21) dans le prolongement du tourillon (25).
